(19) Europäisches Patentamt
European Patent Office
Office européen des brevets

(11) Veröffentlichungsnummer: **0 194 232 B1**

(12) # EUROPÄISCHE PATENTSCHRIFT

(45) Veröffentlichungstag der Patentschrift: **20.09.89**

(21) Anmeldenummer: **86810106.4**

(22) Anmeldetag: **03.03.86**

(51) Int. Cl.⁴: **C 08 L 63/00**, C 08 G 59/54// C08J5/24, C09J7/00 ,(C08L63/00, 81:06)

(54) **Härtbare Gemische enthaltend ein Epoxidharz, ein Imidazolid und ein Polysulfon.**

(30) Priorität: **07.03.85 CH 1023/85**

(43) Veröffentlichungstag der Anmeldung: **10.09.86 Patentblatt 86/37**

(45) Bekanntmachung des Hinweises auf die Patenterteilung: **20.09.89 Patentblatt 89/38**

(84) Benannte Vertragsstaaten: **BE CH DE FR GB IT LI NL**

(56) Entgegenhaltungen:
**EP–A– 0 124 482**
**EP–A– 0 146 498**
**DE–A– 2 052 225**
**DE–A– 3 327 823**
**FR–A– 2 518 094**
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Schmid, Rolf, Dr.**
**Buhnenstock 14**
**CH-3150 Schwarzenburg (CH)**
Erfinder: **Stauffer, Werner**
**Av. Jean-Marie Musy 6**
**CH-1700 Fribourg (CH)**
Erfinder: **Bosshard, Christian, Dr.**
**Schauenburgerstrasse 16 A**
**CH-4402 Frenkendorf (CH)**
Erfinder: **Fischer, Michael, Dr.**
**Allmendstrasse**
**CH-1712 Tafers (CH)**

**EP 0 194 232 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft lagerstabile, heisshärtbare Gemische, die ein Epoxidharz, ein Imidazolid (N-Acylimidazol) als Härter für das Epoxidharz und ein thermoplastisches Polysulfon enthalten, sowie deren Verwendung für die Herstellung geformter Gegenstände, insbesondere von Prepregs für faserverstärkte Verbundstoffe und von Klebefilmen.

Aus der JP-OS 83-49 718 sind Gemische aus einem Epoxidharz, einem Thermoplast und einem Härter für das Epoxidharz bekannt. Der Thermoplast kann unter anderem auch ein Polysulfon sein, und als Härter werden neben anderen Verbindungen auch Imidazole verwendet. Ferner sind Imidazolide (N-Acylimidazole) als Härter für Epoxidharze in der JP-PS 743,212, in der DE-OS 32 46 072 und in der EP-A 0 124 482 offenbart.

Gegenstand der vorliegenden Erfindung sind lagerstabile, heisshärtbare Gemische enthaltend

a) 100 Gewichtsteile eines Epoxidharzes,

b) 3-15 Gewichtsteile eines Imidazolids der Formel I

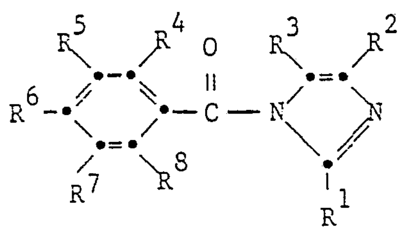

(I)

worin $R^1$, $R^2$ und $R^3$ unabhängig voneinander Wasserstoff, $C_1$-$C_{12}$-Alkyl, $C_5$-$C_{10}$-Cycloalkyl oder $C_6$-$C_{10}$-Aryl bedeuten und $R^4$ bis $R^8$ unabhängig voneinander Wasserstoff, $C_1$-$C_{12}$-Alkyl, Halogen, Nitro oder Trifluormethyl sind, wobei die Substituenten $R^4$ und $R^8$ nicht gleichzeitig Wasserstoff sind, und

c) 2-50 Gewichtsteile eines thermoplastischen Polysulfons mit einem durchschnittlichen Molekulargewicht von mindestens 10 000.

Die erfindungsgemässen Gemische eignen sich für die Herstellung geformter Gegenstände, Prepregs und Klebefilmen, und die ausgehärteten Produkte zeichnen sich durch vorzügliche thermische und mechanische Eigenschaften, insbesondere durch eine hohe Wärmealterungsbeständigkeit sowie eine gute Bruchzähigkeit und Feuchtigkeitsbeständigkeit aus.

Ferner weisen die Gemische ausgezeichnete Verarbeitungseigenschaften auf, wie z. B. eine hohe Homogenität, eine lange Topfzeit (« Pot-life ») und eine günstige Klebrigkeit (« Tack »), welche auch nach längerer Lagerung bei Raumtemperatur erhalten bleibt.

Als Epoxidharze (a) kommen für die vorliegenden Gemische alle diejenigen in Betracht, die mit den Imidazoliden der Formel I ausgehärtet werden können.

Geeignet sind z. B. Di- oder Polyglycidylether von cycloaliphatischen Polyolen, wie 2,2-Bis(4'-hydroxycyclohexyl)propan, Di- oder Polyglycidylether von mehrwertigen Phenolen, wie Resorcin, Bis (4'-hydroxyphenyl)methan (Bisphenol F), 2,2-Bis-(4'-hydroxyphenyl)propan (Bisphenol A), 2,2-Bis-(4'-hydroxy-3',5'-dibromphenyl)propan, 1,1,2,2-Tetrakis(4'-hydroxyphenyl)ethan, oder Kondensationsprodukte von Phenolen mit Formaldehyd, wie Phenol-Novolake und Kresol-Novolake ; ferner Di- oder Poly(β-methylglycidyl)ether der oben angeführten Polyalkohole und Polyphenole ; Polyglycidylester und Poly(β-methylglycidyl)ester von mehrwertigen Carbonsäuren, wie Phthalsäure, Terephthalsäure, Tetrahydrophthalsäure und Hexahydrophthalsäure ;

N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis(4-aminophenyl)methan, Triglycidylisocyanurat, N,N-Diglycidyl-N,N'-ethylenharnstoff, N,N'-Diglycidyl-5,5-dimethylhydantoin, N,N'-Diglycidyl-5-isopropylhydantoin, N,N'-Diglycidyl-5,5-dimethyl-6-isopropyl-5,6-dihydrouracil.

Im allgemeinen können in den erfindungsgemässen Massen auch Gemische von zwei oder mehreren Epoxidharzen verwendet werden.

Besonders geeignet sind Epoxidharze mit einem Epoxidgehalt von 5 bis 9 Aequivalenten pro kg, die Glycidylether, Glycidylester oder N-Glycidylderivate von cycloaliphatischen, vorzugsweise von aromatischen oder heterocyclischen Verbindungen sind.

Bevorzugte Epoxidharze sind Epoxidnovolake, Glycidylderivate von Bisphenolen, von aromatischen Diaminen, von aromatischen oder Cycloaliphatischen Dicarbonsäuren, von Hydantoinen oder der Isocyanursäure. Besonders bevorzugt sind Epoxidphenolnovolake und Glycidylderivate von Bisphenol A, Bisphenol F, Hexahydrophthalsäure oder 4,4'-Diaminodiphenylmethan sowie Triglycidyl-bis-hydantoine oder Gemische dieser Harze. Besonders geeignete Gemische von Epoxidharzen als Komponente (a) sind Gemische eines Epoxiphenolnovolaks mit Glycidylderivaten von Bisphenol A, Bisphenol F, 4,4'-Diaminodiphenylmethan oder mit Triglycidyl-bis-hydantoinen, sowie Gemische eines Glycidylderivates von Bisphenol F mit tetrafunktionellen Epoxidharzen, wie z. B. Bis(N,N-diglycidyl-4-aminophenyl)sulfon,

Bis(N,N-diglycidyl-4-aminophenyl)ether oder 2,2-Bis(N',N'-diglycidyl-4'-aminophenyl)-propan. Ganz besonders bevorzugt wird als Epoxidharz (a) ein Gemisch von Bisphenol F-diglycidylether und Bis(N,N-diglycidyl-4-aminophenyl)methan verwendet.

Die in den erfindungsgemässen Gemischen verwendeten Imidazolide der Formel I sind bekannt oder können in an sich bekannter Weise hergestellt werden. Sie können geeigneterweise durch Umsetzung eines Säurehalogenids der Formel II

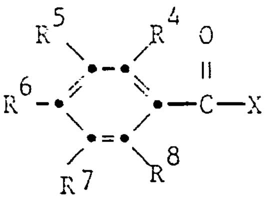

(II)

mit einem Imidazol der Formel III

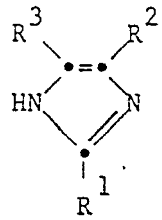

(III)

worin X Chlor oder Brom entspricht, und die Symbole $R^1$ bis $R^8$ die oben angegebene Bedeutung haben, hergestellt werden. Einige dieser Imidazolide und deren Herstellung sind in den vorerwähnten JP-PS 743,212, DE-OS 32 46 072 und EP-A 0 124 482 beschrieben.

Die Substituenten $R^1$ bis $R^8$ können unabhängig voneinander eine verzweigte oder vorzugsweise geradkettige Alkylgruppe mit 1-12, vorzugsweise 1-6 und insbesondere 1-4 C-Atomen sein. Beispiele für geeignete Alkylgruppen sind Dodecyl, Decyl, Octyl, Heptyl, Butyl, Propyl und insbesondere Isopropyl, Ethyl oder Methyl.

Wenn ein oder mehrere der Substituenten $R^1$ bis $R^3$ einen Cycloalkylrest bedeuten, so handelt es sich vorzugsweise um Cyclopentyl oder Cyclohexyl, die jeweils durch eine oder mehrere $C_{1-3}$-Alkylgruppen substituiert sein können. Bevorzugt sind die genannten Gruppen unsubstituiert.

Wenn ein oder mehrere der Substituenten $R^1$ bis $R^3$ einen Arylrest bedeuten, so handelt es sich vorzugsweise um Phenyl oder Naphthyl. Als Halogen kommen für die Substituenten $R^4$ bis $R^8$ Jod oder Brom und Besonders Chlor in Betracht.

Erfindungsgemäss werden vorzugsweise Imidazolide (b) verwendet worin die Substituenten $R^2$, $R^3$, $R^5$ und $R^7$ Wasserstoff sind, der Substituent $R^1$ $C_1$-$C_4$-Alkyl oder Phenyl ist und die Substituenten $R^4$, $R^6$ und $R^8$ unabhängig voneinander Wasserstoff, $C_1$-$C_4$-Alkyl oder Halogen sind. Besonders bevorzugt sind Imidazolide der Formel I, worin $R^2$, $R^3$, $R^5$ und $R^7$ Wasserstoff sind, $R^1$ Methyl, Ethyl oder Phenyl ist und $R^6$ Wasserstoff oder Methyl und $R^4$ und $R^8$ jeweils Chlor oder Methyl bedeuten. Insbesondere können erfindungsgemäss 1-(2',6'-Dichlorbenzoyl)-2-phenylimidazol, 1-(2',4',6'-Trimethylbenzoyl)-2-ethylimidazol,1-(2',6'-Dichlorbenzoyl)-2-methylimidazol, 1-(2',4',6'-Trimethylbenzoyl)-2-methylimidazol und insbesondere 1-(2',4',6'-Trimethylbenzoyl)-2-phenylimidazol verwendet werden.

Die erfindungsgemäss verwendbaren Imidazolide der Formel I sind bei erhöhter Temperatur hochreaktive Härter, sind jedoch bei Raumtemperatur stabil, wodurch sie längere Lager- und Verarbeitungszeiten erlauben.

Als Polysulfonharze (c) eignen sich z. B. solche mit der wiederkehrenden Einheit der Formel

$$—A—SO_2—$$

worin A eine zweiwertige, gegebenenfalls durch Ethersauerstoffatome und/oder zweiwertige aliphatische Gruppen unterbrochene aromatische Gruppe bedeutet.

Vorzugsweise hat das Polysulfon eine Wärmeformbeständigkeitstemperatur von wenigstens 150 °C, gemessen nach der ASTM-Spezifikation D648.

Die einzusetzenden Polysulfone können in bekannter Weise z. B. dadurch erhalten werden, dass man entweder (a) ein Sulfonylhalogenid der Formel $HA_1SO_2X$ oder (b) ein Gemisch eines Disulfonylhalogenids der Formel $XSO_2A_1SO_2X$ mit einer sulfonylhalogenidfreien Verbindung der Formel $HA_2H$, worin $A_1$ und $A_2$ gleich oder verschieden sind und jeweils eine zweiwertige gegebenenfalls durch Ethersauerstoffatome und/oder zweiwertige aliphatische Gruppen unterbrochene aromatische Gruppe bedeuten und X ein Chlor- oder Bromatom darstellt, in einem inerten Lösungsmittel in Anwesenheit eines Lewis-Säure-Katalysators erhitzt. Die nach Verfahren (a) hergestellten Polysulfone enthalten die wiederkehrende Einheit

$$—A_1—SO_2—$$

wohingegen die nach Verfahren (b) hergestellten Polysulfone die wiederkehrende Einheit

$$—A_1—SO_2—A_2—SO_2—$$

aufweisen.

In den erfindungsgemässen Massen bevorzugt verwendete Polysulfonharze sind solche, welche Ethergruppen in der wiederkehrenden Einheit aufweisen, jedoch von seitenständigen Hydroxylgruppen frei sind. Es handelt sich dabei besonders um Polysulfone mit einer wiederkehrenden Einheit der Formel

$$—OA_3OA_4SO_2A_4—$$

worin $A_3$ und $A_4$ zweiwertige Aryl-, insbesondere Phenylengruppen, die durch Chlor oder $C_1$-$C_4$-Alkyl, beispielsweise Methylgruppen substituiert sein können, darstellen. Man erhält derartige Polysulfone in an sich bekannter Weise durch Reaktion eines Dialkalimetallsalzes eines zweiwertigen Phenols der Formel $HOA_3OH$ mit einem Bis-(monochloraryl)-sulfon der Formel $ClA_4SO_2A_4Cl$ in Dimethylsulfoxid. Bevorzugtere Polysulfonharze sind solche mit einer wiederkehrenden Einheit der Formel

$$—OA_5—Y—A_5OA_6—SO_2—A_6—$$

worin $A_5$ und $A_6$ jeweils eine gegebenenfalls durch Chlor oder $C_1$-$C_4$-Alkylgruppen, wie z. B. Methylgruppen, substituierte Phenylengruppe und Y eine Kohlenstoff-Kohlenstoffbindung, die $—SO_2—$ oder eine aliphatische Kohlenwasserstoffgruppe, insbesondere eine solche mit nicht mehr als vier Kohlenstoffatomen wie z. B. solche der Formel

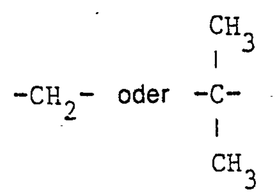

bedeuten.

Besonders bevorzugt sind thermoplastische Polysulfonharze mit wiederkehrenden Einheiten der Formel IV

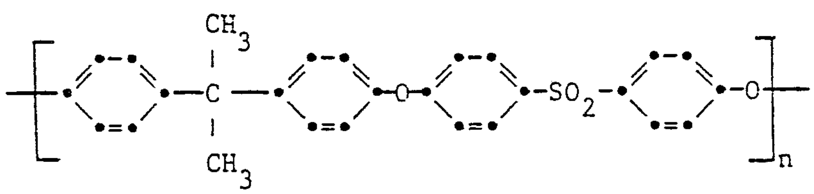

(IV)

wobei n im Durchschnitt vorzugsweise einen Wert von 50-120 hat.

Besonders vorteilhafte Polysulfone sind z. B. die bei der Union Carbide Corporation erhältlichen Verbindungen, wie z. B. « Polysulfone Udel P1800 », das nach Angabe des Herstellers einen Schmelzpunkt im Bereich von 350-370 °C, eine Wärmeformbeständigkeit (ASTM-Spezifikation D648) von 175 °C hat und im Durchschnitt pro Molekül 50-80 wiederkehrende Einheiten der Formel IV enthält, wobei man von einem Molekulargewichtsbereich von ungefähr 22 000-35 000 ausgehen kann.

Weiterhin geeignet ist eine bei Union Carbide Corporation unter dem Namen « Polysulfone P2300 » erhältliche ähnliche Substanz; nach Angaben des Herstellers hat diese einen Molekulargewichtsbereich von 30 000-50 000, wobei man davon ausgehen kann, dass die Substanz im Durchschnitt pro Molekül ungefähr 68-113 wiederkehrende Einheiten der Formel IV enthält, sowie eine bei Union Carbide Corporation unter dem Namen « Polysulfone P3500 » erhältliche ähnliche Substanz; nach Angaben des Herstellers hat diese einen Molekulargewichtsbereich, der zwischen dem von « Polysulfone Udel P1800 » und jenem von « Polysulfone P2300 » liegt; das Molekulargewicht beträgt ca. 35 000.

Erfindungsgemäss können als Komponente (c) auch Gemische von zwei oder mehreren Polysulfonen verwendet werden.

Das Epoxidharz (a) und das Polysulfon (c) der erfindungsgemässen Massen werden vorzugsweise so gewählt, dass das Polysulfon im Epoxidharz löslich ist, dass aber nach dem Härten des Epoxidharzes zwei ineinander fein verteilte Phasen entstehen. Solche Systeme ergeben gehärtete Produkte mit besonders guten Eigenschaften.

Bevorzugte erfindungsgemässe Gemische sind auch solche, die neben den vorerwähnten Komponenten (a) bis (c) noch zusätzlich als Komponente (d) 1-12, vorzugsweise 2-6 Gewichtsteile, bezogen auf 100 Gewichtsteile Epoxidharz (a), eines feinkörnigen Füllstoffs mit einer mittleren Grösse der Primärteilchen zwischen 2 und 100 nm, vorzugsweise von 3-30, und besonders bevorzugt von 5-15 nm enthalten. Besonders geeignete Füllstoffe (d) sind Titandioxid und insbesondere Siliciumdioxid oder Aluminiumoxid. Solche Füllstoffe werden z. B. von der Firma Degussa (Schweiz) AG, Zürich unter dem Namen Aerosil® und Alox C® angeboten und weisen je nach Produkt eine mittlere Grösse der Primärteilchen zwischen 7 und 12 nm auf. Die Zugabe der oben erwähnten feinkörnigen Füllstoffe verbessert insbesondere die dynamischen Eigenschaften der erfindungsgemässen Massen, was z. B. in einem dynamischen Wechselbiegeversuch mit den unter Verwendung der Massen hergestellten Laminaten festgestellt werden kann.

Vorzugsweise verwendet man erfindungsgemässe Gemische, worin die Anteile der Komponenten (b) und (c) unabhängig voneinander betragen : Imidazolid (b) 4-12, insbesondere 5-8 Gewichtsteile und Polysulfon (c) 5-30, insbesondere 8-15 Gewichtsteile, jeweils bezogen auf 100 Gewichtsteile des Epoxidharzes (a).

Bei erfindungsgemässen Gemischen, die zusätzlich als Komponente (d) einen feinkörnigen Füllstoff enthalten, verwendet man vorzugsweise solche, worin der Anteil des Polysulfons (c) 10-40, insbesondere 12-25 Gewichtsteile, bezogen auf 100 Gewichtsteile des Epoxidharzes (a) beträgt.

Die erfindungsgemässen Gemische können durch gutes Durchmischen bzw. Ineinanderlösen aller Komponenten bereitgestellt, wobei die einzelnen Komponenten in verschiedener Reihenfolge beigegeben werden können. Das Polysulfon kann z. B. unter Erhitzen im Epoxidharz gelöst werden, und nach Abkühlen auf etwa 120 °C können der Imidazolid-Härter und gegebenenfalls der feinkörnige Füllstoff oder weitere Zusätze beigegeben werden. Bei Verwendung eines feinkörnigen Füllstoffs wird dieser vorzugsweise vorerst mit dem Epoxidharz im Dreiwalzenstuhl abgerieben und anschliessend das Polysulfon im Harz gelöst.

Die erfindungsgemässen Gemische können vielseitig angewendet werden und eignen sich beispielsweise als Giessharze, Laminier- oder Tränkharze, Formmassen, Dichtungsmassen, Einbettungs- und Isoliermassen für die Elektrotechnik und vorzugsweise als Klebstoffe und als Matrixharze für Verbundstoffe, insbesondere zur Herstellung von faserverstärkten Kunststoffen.

Gewünschtenfalls, insbesondere bei der Mitverwendung von Modifizierungsmitteln, können die erfindungsgemässen Gemische in einem organischen Lösungsmittel, wie Toluol, Xylol, Methylethylketon, Methylenchlorid oder einem ähnlichen, in der Lackindustrie üblichen Lösungsmittel oder Lösungsmittelgemisch gelöst werden. Solche Lösungen eignen sich vor allem als Imprägnierungsmittel oder Beschichtungsmittel.

Die erfindungsgemässen härtbaren Mischungen können ferner vor der Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen oder Formtrennmitteln, versetzt werden. Als Streckmittel, Verstärkungsmittel, Füllmittel und Pigmente, die in den erfindungsgemässen härtbaren Mischungen eingesetzt werden können, seien z. B. genannt : flüssige Cumaron-Inden-Harze, Textilfasern, Glasfasern, Asbestfasern, Borfasern, Kohlenstoffasern, Polyethylenpulver, Polypropylenpulver, Quarzmehl, mineralische Silikate, wie Glimmer, Asbestmehl, Schiefermehl, Kaolin, Kreidemehl, Antimontrioxid, Bentone, Lithopone, Schwerspat, Titandioxid, Russ, Graphit, Oxidfarben, wie Eisenoxid, oder Metallpulver, wie Aluminiumpulver oder Eisenpulver.

Als Verlaufmittel beim Einsatz der härtbaren Mischungen speziell im Oberflächenschutz, kann man z. B. Silikone, flüssige Acrylharze, Celluloseacetobutyrat, Polyvinylbutyral, Wachse, Stearate etc. (welche z. T. auch als Formtrennmittel Anwendung finden) zusetzen.

Als Weichmacher können für die Modifizierung der härtbaren Mischungen z. B. Dibutyl-, Dioctyl- und Dinonylphthalat, Trikresylphosphat, Trixylenylphosphat und Diphenoxyethylformal eingesetzt werden.

Die erfindungsgemässen Gemische werden vorzugsweise gehärtet, indem man sie auf eine Temperatur im Bereich von 120 bis 250 °C, insbesondere 150° bis 200°C erhitzt. Man kann die Härtung in bekannter Weise auch zwei- oder mehrstufig durchführen, wobei man die erste Härtungsstufe bei niedriger Temperatur und die Nachhärtung bei höherer Temperatur durchführt.

Gewünschtenfalls kann man den härtbaren Gemischen zur Herabsetzung der Viskosität aktive Verdünner, wie z. B. Styroloxid, Butylglycidylether, 2,2,4-Trimethylpentylglycidylether, Phenylglycidylether, Kresylglycidylether, Glycidylester von synthetischen, hochverzweigten, in der Hauptsache tertiären aliphatischen Monocarbonsäuren zusetzen.

Man kann bei der Härtung ausserdem Härtungsbeschleuniger einsetzen ; solche Beschleuniger sind z. B. tertiäre Amine, deren Salze oder quaternäre Ammoniumverbindungen, z. B. Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat ; oder Alkalimetallalkoholate, wie z. B. Natriumhexantriolat.

Gegenstand der vorliegenden Erfindung ist auch die Verwendung der erfindungsgemässen Gemische zur Herstellung von gehärteten Formkörpern, sowie die Verwendung zur Herstellung von Prepregs für faserverstärkte Verbundstoffe oder von Klebefilmen. Die Prepregs und die Klebefilme können in an sich bekannter Weise hergestellt werden, z. B. im Imprägnierverfahren in Anwesenheit eines der oben erwähnten Lösungsmittel, eines halogenierten Lösungsmittels, wie z. B. Methylenchlorid, oder im sogenannten « hot melt »-Verfahren.

Die erfindungsgemässen Formstoffe zeichnen sich im allgemeinen durch relativ hohe Glasumwandlungstemperaturen bei gleichzeitig hohen mechanischen Festigkeiten, und insbesondere durch eine ausgezeichnete Wärmealterungsbeständigkeit, Bruchzähigkeit und Feuchtigkeitsbeständigkeit aus.

Die nachfolgenden Beispiele erläutern die Erfindung näher.

Die in den folgenden Beispielen verwendeten Komponenten (a)-(d) sind wie folgt:

Epoxidharz 1: Ein bei Raumtemperatur flüssiger Epoxidphenolnovolak mit einem Epoxidgehalt von 5,7 Aequivalenten/kg und einer Viskosität bei 52 °C von ca. 2,0 Pa·s.

Epoxidharz 2: Ein Tetraglycidylderivat von 4,4'-Diaminodiphenylmethan mit einem Epoxidgehalt von 7,8 Aequivalenten/kg und einer Viskosität bei 50 °C von ca. 1,3 Pa·s.

Epoxidharz 3: Ein Triglycidyl-bis-hydantoin der Formel V mit einem Epoxidgehalt von 5,6 Aequivalenten/kg und einer Viskosität bei 80 °C von ca. 1,3 Pa·s.

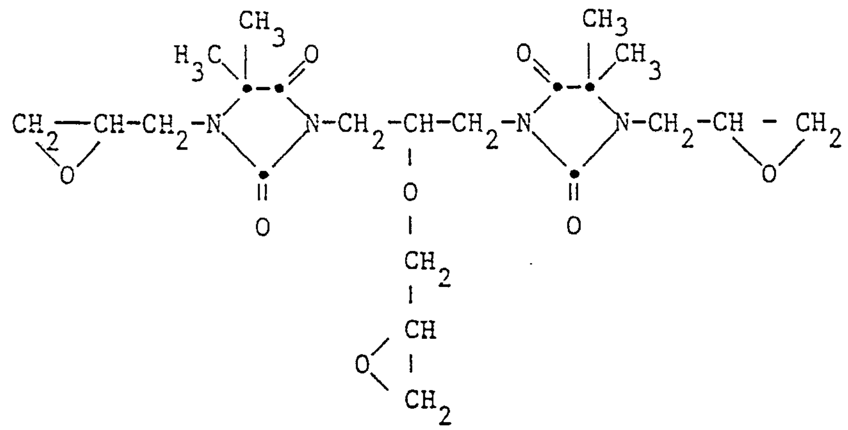

(V)

Epoxidharz 4: Ein Bisphenol A-diglycidylether mit einem Epoxidgehalt von 5,4 Aequivalenten/kg und einer Viskosität bei 25 °C von 1,0 Pa·s.

Epoxidharz 5: Kristalliner Bisphenol F-diglycidylether mit einem Epoxidgehalt von 6,4 Aequivalenten/kg.

Epoxidharz 6: Hexahydrophthalsäure-diglycidylester mit einem Epoxidgehalt von 5,9 Aequivalenten/kg und einer Viskosität bei 25 °C von 0,9 Pa·s.

Polysulfon 1: Polysulfon Udel P1800® der Union Carbide Corporation mit einem Schmelzpunkt im Bereich von 350-370 °C, einer Wärmeformbeständigkeit (nach ASTM D 648) von 175 °C und einem Molekulargewichtsbereich von ca. 22 000 - 35 000.

Imidazolid 1: 1-(2',4',6'-Trimethylbenzoyl)-2-phenylimidazol, hergestellt gemäss der EP-A 0 124 482.

Imidazolid 2: 1-(2',6'-Dichlorbenzoyl)-2-phenylimidazol, hergestellt gemäss der DE-OS 32 46 072.

Imidazolid 3: 1-(2',4',6'-Trimethylbenzoyl)-2-ethylimidazol, hergestellt gemäss der EP-A 0 124 482.

Imidazolid 4: 1-(2',6'-Dichlorbenzoyl)-2-methylimidazol, hergestellt gemäss der DE-OS 32 46 072.

Imidazolid 5: 1-(2',4',6'-Trimethylbenzoyl)-2-methylimidazol, hergestellt gemäss der EP-A 0 124 482.

Alox C®: Feinkörniges Aluminiumoxid der Degussa (Schweiz) AG, Zürich, mit einer mittleren Grösse der Primärteilchen von 10 nm.

Aerosil 300®: Feinkörniges Siliciumdioxid der Degussa (Schweiz) AG, Zürich, mit einer mittleren Grösse der Primärteilchen von 7 nm.

## Beispiel 1

20 g Polysulfon 1 werden bei 200 °C in 160 g Epoxidharz 1 gelöst und nach Abkühlen auf 120 °C mit 40 g Epoxidharz 2 und 12 g Imidazolid 1 gemischt. Ein Teil der Mischung wird in eine Form aus Anticorodal (200 × 200 × 4 mm) gegossen und während 2 h bei 150 °C und 2 h bei 180 °C gehärtet. Ein

Teil der Mischung wird für die Messung der Bruchzähigkeit nach dem Doppeltorsionsversuch gemäss der Vorschrift beschrieben in « Journal of Materials Science, 10, 1 334 (1975) und 14, 776 (1979) verwendet. Dabei werden zwei Aluminium-Platten Extrudal 050 AlMgSi 0,5 der Abmessung 200 × 20 × 5 mm, die mit Chromschwefelsäure behandelt sind, mit dem härtbaren Gemisch verklebt und die Verklebung wie oben angegeben unter Anwendung eines leichten Druckes gehärtet. Bei dieser Messmethode wird die Rissfortpflanzung in der Verklebung gemessen, d. h., aus der maximalen Last für die Rissfortpflanzung wird die Bruchenergie in J/m² berechnet.

Es werden die folgenden Resultate erhalten :

| | |
|---|---|
| Biegefestigkeit (BF) nach ISO 178 | = 112 MPa |
| Randfaserdehnung beim Bruch (RD) nach ISO 178 | = 6,8 % |
| Glasumwandlungstemperatur (Tg), gemessen | = 177 °C |
| mit dem thermomechanischen Analysator 3 000 der Fa. Mettler AG, Greifensee, CH Bruchzähigkeit (BZ), Doppeltorsionsversuch | = 212 J/m² |

Beispiel 2

Analog Beispiel 1 wird ein weiterer Versuch durchgeführt unter Verwendung von 200 g Epoxidharz 1, 12 g Imidazolid 1 und variablen Mengen des Polysulfons 1. Es werden folgende Ergebnisse erhalten (der Biegeversuch wird zusätzlich nach 10-tägiger Lagerung in Wasser bei 85 °C durchgeführt) :

| Menge des Polysulfons 1 (g) | 5 | 10 | 15 | 20 | 25 |
|---|---|---|---|---|---|
| BF (MPa) | 110 | 114 | 115 | 112 | 113 |
| BF (nach $H_2O$)(MPa) | 102 | 97 | 106 | 107 | 99 |
| RD (%) | 6,2 | 6,7 | 7,1 | 7,5 | 6,7 |
| RD (nach $H_2O$)(%) | 4,9 | 4,4 | 5,4 | 5,7 | 4,5 |
| BZ (J/m²) | 91 | 231 | 206 | 150 | 140 |

Beispiel 3

Entsprechend Beispiel 1 werden 48 g Polysulfon 1 in 400 g Epoxidharz 1 gelöst und nachträglich mit 40 g Epoxidharz 3 und 24 g Imidazolid 1 gemischt. Ein Teil der Mischung wird entsprechend Beispiel 1 gehärtet. Die Formkörper haben folgende Eigenschaften :

| | |
|---|---|
| $T_g$ | 174 °C |
| BF | 113 MPa |
| RD | 5,35 % |
| BZ | 276 J/m² |

256 g der Mischung werden für einen weiteren Versuch in 150 g $CH_2Cl_2$ gelöst. Im Imprägnierverfahren wird mit Kohlefasern T 300-50 B (Toray) ein unidirektionales Prepreg hergestellt. Das nach Abdampfen des Lösungsmittels erhaltene Prepreg zeigt eine gute Klebrigkeit (« Tack »), welche auch nach mehrwöchiger Lagerung bei Raumtemperatur erhalten bleibt. Die Gelierzeit des Prepregs beträgt 66 min bei 120 °C resp. 13 min bei 160 °C. Das Prepreg wird zu einem Laminat verpresst und während 2 h bei 150 °C und 2 h bei 180 °C gehärtet. Es wird ein Laminat (60 Vol. % Faser) mit einer BF von 1 290 MPa in Faserrichtung und 65 MPa quer zur Faser erhalten. Nach einer Alterung in Luft während 30 Tagen bei 180 °C beträgt die BF in der Faserrichtung 1 360 MPa, quer zur Faser 77 MPa, was die hohe Alterungsbeständigkeit der erfindungsgemässen Zusammensetzung zeigt.

Beispiel 4

a) 48 g Polysulfon 1 werden in 400 g Epoxidharz 1 in der Wärme gelöst und mit 24 g Imidazolid 1 vermischt.

b) Eine 2. Mischung wird wie a) hergestellt, jedoch werden zusätzlich 8 g Alox C® auf dem Dreiwalzenstuhl zugemischt.

c) Eine weitere Mischung wird analog b) hergestellt, jedoch unter Verwendung von 16 g Alox C®.

Die nach dem Verfahren gemäss Beispiel 1 hergestellten Formkörper haben folgende Eigenschaften :

| | a | b | c |
|---|---|---|---|
| $T_g$ (°C) | 174 | 174 | 174 |
| BF (MPa) | 109 | 112 | 101 |
| RD (%) | 5,3 | 5,7 | 5,1 |
| RD (nach 10 d $H_2O$, 85°C)(%) | 4,7 | 4,6 | 5,3 |
| TKF*, 25°C (MPa) | 98 | 95 | 96 |
| TKF*, 120°C (MPa) | 50 | 63 | 66 |
| BZ ($J/m^2$) | 209 | 194 | 150 |

* Zur Bestimmung der Tosionsklebefestigkeit werden gemäss Vorschrift für Messungen mit dem « Twist-o-Meter » (Firma Epprecht, Instruments + Controls, Bassersdorf, CH) Aluminiumzapfen verklebt. Dazu wird die härtbare Mischung unter Rühren auf 120 °C erhitzt, bis man eine homogene, niederviskose Lösung erhält. Mit der auf Raumtemperatur abgekühlten Lösung werden 5 Verklebungen hergestellt, die dann durch Erhitzen während 2 Stunden bei 150 °C und 2 Stunden bei 180 °C gehärtet werden.

Mit den drei Mischungen a), b) und c) werden Prepregs mit einem Glasfasergewebe 80/20 ($m^2$-Gewicht : 375 g/m)$^2$ nach dem « Hot-Melt »-Verfahren hergestellt. Die Prepregs zeichnen sich durch gute Verarbeitbarkeit (« Tack ») aus. Aus den Prepregs (12 Lagen) werden in der Presse (Härtung 2 h 150 °C + 2 h 180 °C) Laminate hergestellt. In der Hauptfaserrichtung haben die Laminate eine Biegefestigkeit von 550-600 MPa. Im dynamischen Wechselbiegeversuch (4-Punkt-Auflage von Prüfkörpern 100 × 20 × 4 $mm^3$) zeigt das Laminat a) bei ± 200 MPa Belastung eine Lebensdauer von 8 × $10^5$ Lastwechseln (Abfall der Spannung auf 40 % bei gleichbleibender max. Deformation), b) zeigt eine Lebensdauer von 25 × $10^5$ und c) von 80 × $10^5$ Lastwechseln unter den gleichen Bedingungen.

Beispiel 5

Bei Verwendung einer gleichen Mischung wie im Beispiel 4b), jedoch mit 8 g Aerosil 300®, das mit einem Silan behandelt wurde, anstelle von Alox C werden folgende Eigenschaften an den Formkörpern gemessen :

| | |
|---|---|
| $T_g$ | 179 °C |
| BF | 95 MPa |
| RD | 4,2 % |
| BZ | 163 $J/m^2$ |

Beispiel 6

30 g Epoxidharz 1 werden in der Wärme mit 70 g Epoxidharz 4 und 10 g Polysulfon 1 gut gemischt und nach Abkühlen auf 120 °C und Zumischen von 6 g Imidazolid 2 entsprechend Beispiel 1 verarbeitet und gehärtet. Die Formkörper haben folgende Eigenschaften :

| | |
|---|---|
| BF | 97 MPa |
| RD | 5,2 % |
| $T_g$ | 175 °C |

Beispiel 7

50 g Epoxidharz 2 werden in der Wärme mit 50 g Epoxidharz 5 und 15 g Polysulfon 1 gut gemischt und nach Abkühlen auf ca. 120 °C und Zumischen von 6 g Imidazolid 3 entsprechend Beispiel 1 verarbeitet und gehärtet. Die erhaltenen Formkörper haben folgende Eigenschaften :

| | |
|---|---|
| BF | 116 MPa |
| RD | 9,6 % |
| $T_g$ | 175 °C |

Beispiel 8

50 g Epoxidharz 2 werden mit 50 g Epoxidharz 5 und 2 g Alox C® gut gemischt und während ca. 20 min auf dem Dreiwalzenstuhl abgerieben. Die Mischung wird auf ca. 180 °C erwärmt und mit 20 g Polysulfon 1 gemischt und so lange gerührt, bis sich das Polysulfon gelöst hat. Die Lösung wird auf 140 °C abgekühlt, mit 6 g Imidazolid 1 vermischt und nach Beispiel 1 verarbeitet.

Es werden folgende Eigenschaften gemessen :

| | |
|---|---|
| BF | 122 MPa |
| RD | 7,5 % |
| $T_g$ | 179 °C |
| BZ | 196 J/m² |

Beispiel 9

Analog Beispiel 8 wird ein Polymer aus 30 g Epoxidharz 2, 70 g Epoxidharz 5, 5 g Alox C® 24 g Polysulfon 1 und 6 g Imidazolid 1 hergestellt. Das gehärtete Polymer hat folgende Eigenschaften :

| | |
|---|---|
| BF | 123 MPa |
| RD | 7,3 % |
| $T_g$ | 166 °C |
| BZ | 385 J/m² |

Beispiel 10

60 g der entsprechend Beispiel 9 hergestellten Mischung aus Epoxidharz 2 und 5, Alox C® und Polysulfon 1 werden in 40 g Methylenchlorid gelöst und mit 2,3 g Imidazolid 1 gut vermischt. Mittels einer Rakel wird mit der Lösung ein Glasfasergewebe 80/20 imprägniert, und das Lösungsmittel wird mit einem leichten Luftzug verdampft. Es resultiert ein transparentes Prepreg mit gutem « Tack ». Das Prepreg kann bei Raumtemperatur über 1 Monat gelagert werden, ohne dass die Verarbeitungseigenschaften (« Tack ») sich verändern. 14 Lagen Prepreg werden zu einer Laminatplatte von 4 mm Dicke verpresst und während 2 h bei 150 °C und 2 h bei 180 °C gehärtet (Fasergehalt 65,5 %). Die Laminatplatte hat eine Biegefestigkeit von 700 MPa in der Hauptfaserrichtung und 200 MPa quer zur Hauptfaserrichtung. Nach Lagerung in Wasser bei 71 °C während 64 Tagen weist das Laminat eine interlaminere Scherfestigkeit von 67 MPa bei Raumtemperatur und 34,4 MPa bei 71 °C auf. Die Wasseraufnahme beträgt 0,8 %.

Beispiel 11

a) 50 g Epoxidharz 2 werden in der Wärme mit 50 g Epoxidharz 5 gemischt und mit 4 g Alox C® auf dem Dreiwalzenstuhl abgerieben. Anschliessend werden 12 g Polysulfen 1 bei ca. 180 °C im Harz gelöst und nach Abkühlen auf 120 °C und zumischen von 6 g Imidazolid 1 entsprechend Beispiel 1 verarbeitet und gehärtet. Es werden folgende Eigenschaften an den Formkörpem gemessen :

| | | |
|---|---|---|
| BF | 112 | MPa |
| Tg | 179 | °C |
| BZ | 177 | $J/m^2$. |

b) Bei Verwendung von 4 g Aerosil 300® anstelle von Alox C® und sonst gleicher Verarbeitung und Zusammensetzung wie unter a) werden folgende Ergebnisse erhalten :

| | | |
|---|---|---|
| BF | 124 | MPa |
| Tg | 177 | °C |
| BZ | 151 | $J/m^2$. |

Beispiel 12

Formkörper werden entsprechend Beispiel 11a hergestellt, jedoch unter Verwendung der gleichen Menge eines anderen Imidazolides. Es werden folgende Eingenschaften gemessen :

| Imidazolid | 2 | 4 | 5 | |
|---|---|---|---|---|
| Gelierzeit bei 70°C | 1140 | 670 | 160 | min. |
| BF | 126 | 127 | 100 | MPa |
| Tg | 174 | 168 | 184 | °C |
| BZ | 201 | 204 | 292 | $J/m^2$. |

Beispiel 13

Bei Verwendung von 50 g Epoxidharz 2 und 50 g Epoxidharz 6 und sonst gleicher Verarbeitung und Zusammensetzung wie im Beispiel 11 a) werden folgende Ergebnisse gemessen :

| | |
|---|---|
| Gelierzeit bei 70 °C | 7 200 min |
| BF | 146 MPa |
| RD | 7.1 % |
| Tg | 149 und 170 °C |
| BZ | 305 $J/m^2$ |

Beispiel 14

Bei Verwendung von 80 g Epoxidharz 2, 20 g Epoxidharz 6 und 10 g Polysulfon 1, sonst gleicher Verarbeitung und Zusammensetzung wie im Beispiel 11 a) werden folgende Resultate erhalten :

| | |
|---|---|
| Gelierzeit bei 70° | 2 800 min |
| BF | 131 MPa |
| RD | 7.4 % |
| Tg | 186 °C |
| BZ | 230 $J/m^2$ |

**Patentansprüche**

1. Lagerstabiles, heisshärtbares Gemisch enthaltend
a) 100 Gewichtsteile eines Epoxidharzes,
b) 3-15 Gewichtsteile eines Imidazolids der Formel I

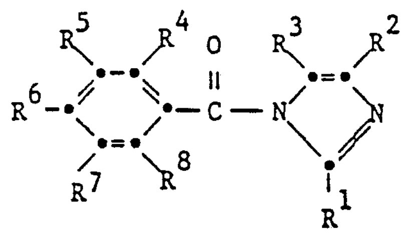

(I)

worin $R^1$, $R^2$ und $R^3$ unabhängig voneinander Wasserstoff, $C_1$-$C_{12}$-Alkyl, $C_5$-$C_{10}$-Cycloalkyl oder $C_6$-$C_{10}$-Aryl bedeuten und $R^4$ bis $R^8$ unabhängig voneinander Wasserstoff, $C_1$-$C_{12}$-Alkyl, Halogen, Nitro oder Trifluormethyl sind, wobei die Substituenten $R^4$ und $R^8$ nicht gleichzeitig Wasserstoff sind, und
c) 2-50 Gewichtsteile eines thermoplastischen Polysulfons mit einem durchschnittlichen Molekulargewicht von mindestens 10 000.

2. Gemisch nach Anspruch 1, worin das Epoxidharz einen Epoxidgehalt von 5-9 Aequivalenten/kg hat, und ein Glycidylether, ein Glycidylester oder ein N-Glycidylderivat einer cycloaliphatischen, vorzugsweise einer aromatischen oder heterocyclischen Verbindung ist.

3. Gemisch nach Anspruch 1, worin das Epoxidharz ein Epoxinovolak, ein Glycidylderivat eines Bisphenols, einer aromatischen oder cycloaliphatischen Dicarbonsäure, eines aromatischen Diamins, eines Hydantoins oder der Isocyanursäure ist.

4. Gemisch nach Anspruch 1, worin das Epoxidharz ein Epoxiphenolnovolak, ein Glycidylderivat von Bisphenol A, von Bisphenol F, der Hexahydrophthalsäure oder von 4,4'-Diaminodiphenylmethan ist, ein Triglycidyl-bis-hydantoin ist, oder ein Gemisch dieser Harze darstellt.

5. Gemisch nach Anspruch 1, worin das Epoxidharz ein Gemisch von Bisphenol-F-diglycidylether und Bis(N,N-diglycidyl-4-aminophenyl)methan ist.

6. Gemisch nach Anspruch 1, worin die Substituenten des Imidazolids $R^2$, $R^3$, $R^5$ und $R^7$ Wasserstoff sind, der Substituent $R^1$ $C_1$-$C_4$-Alkyl oder Phenyl ist und die Substituenten $R^4$, $R^6$ und $R^8$ unabhängig voneinander Wasserstoff, $C_1$-$C_4$-Alkyl oder Halogen sind.

7. Gemisch nach Anspruch 6, worin $R^1$ Methyl, Ethyl oder Phenyl, $R^6$ Wasserstoff oder Methyl und $R^4$ und $R^8$ jeweils Chlor oder Methyl sind.

8. Gemisch nach Anspruch 1, worin das Polysulfon eine Wärmeformbeständigkeit von mindestens 150 °C hat.

9. Gemisch nach Anspruch 8, worin das Polysulfon wiederkehrende Einheiten der Formel IV

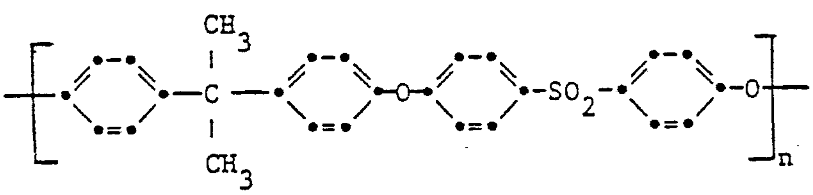

(IV)

enthält, worin n im Durchschnitt vorzugsweise einen Wert von 50-120 hat.

10. Gemisch nach Anspruch 9, worin das Polysulfon einen Schmelzpunkt im Bereich von 350-370 °C, eine Wärmeformbeständigkeit von 175 °C und n im Durchschnitt einen Wert von 50-80 hat.

11. Gemisch nach Anspruch 1, das zusätzlich als Komponente (d) 1-12, vorzugsweise 2-6 Gewichtsteile, eines feinkörnigen Füllstoffs mit einer mittleren Grösse der Primärteilchen von 2-100 nm, vorzugsweise von 3-30 nm, enthält.

12. Gemisch nach Anspruch 11, worin der Füllstoff Titandioxid und insbesondere Siliciumdioxid oder Aluminiumoxid ist.

13. Gemisch nach Anspruch 1, worin die Anteile der Komponenten (b) und (c) unabhängig voneinander betragen: Imidazolid (b) 4-12, insbesondere 5-8 Gewichtsteile und Polysulfon (c) 5-30, insbesondere 8-15 Gewichtsteile, jeweils bezogen auf 100 Gewichtsteile des Epoxidharzes (a).

14. Gemisch nach Anspruch 11, worin der Anteil des Polysulfons (c) 10-40, insbesondere 12-25 Gewichtsteile, bezogen auf 100 Gewichtsteile des Epoxidharzes (a) beträgt.

15. Verwendung des Gemisches nach Anspruch 1 zur Herstellung von gehärteten Formkörpern.

16. Verwendung des Gemisches nach Anspruch 1 zur Herstellung von Prepregs für faserverstärkte Verbundstoffe oder von Klebefilmen.

## Claims

1. A storage-stable, heat-curable mixture containing
a) 100 parts by weight of an epoxy resin,
b) 3 to 15 parts by weight of an imidazolide of the formula I

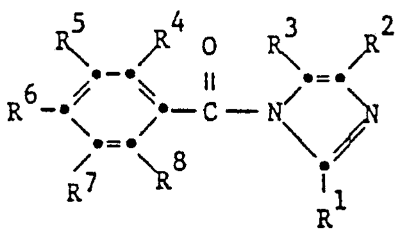

(I)

wherein $R^1$, $R^2$ and $R^3$ independently of one another are hydrogen, $C_1$-$C_{12}$alkyl, $C_5$-$C_{10}$cycloalkyl or $C_6$-$C_{10}$aryl and $R^4$ to $R^8$ independently of one another are hydrogen, $C_1$-$C_{12}$alkyl, halogen, nitro or trifluoromethyl, where the substituents $R^4$ and $R^8$ are not simultaneously hydrogen, and
c) 2 to 50 parts by weight of a thermoplastic polysulfone with an average molecular weight of at least 10 000.

2. A mixture according to claim 1, wherein the epoxy resin has an epoxide content of 5 to 9 equivalents/kg and is a glycidyl ether, a glycidyl ester or an N-glycidyl derivative of a cycloaliphatic compound or, preferably, of an aromatic or heterocyclic compound.

3. A mixture according to claim 1, wherein the epoxy resin is an epoxy novolak, or a glycidyl derivative of a bisphenol, of an aromatic or cycloaliphatic dicarboxylic acid, of an aromatic diamine, of a hydantoin or of isocyanuric acid.

4. A mixture according to claim 1, wherein the epoxy resin is an epoxy phenol novolak, a glycidyl derivative of bisphenol A, of bisphenol F, of hexahydrophthalic acid or of 4,4'-diaminodiphenyl-methane, or is a triglycidyl bishydantoin, or a mixture of these resins.

5. A mixture according to claim 1, wherein the epoxy resin is a mixture of bisphenol F diclycidyl ether and bis(N,N-diglycidyl-4-aminophenyl)-methane.

6. A mixture according to claim 1, wherein the substituents $R^2$, $R^3$, $R^5$ and $R^7$ of the imidazolide are hydrogen, the substituent $R^1$ is $C_1$-$C_4$alkyl or phenyl and the substituents $R^4$, $R^6$ and $R^8$ independently of one another are hydrogen, $C_1$-$C_4$alkyl or halogen.

7. A mixture according to claim 6, wherein $R^1$ is methyl, ethyl or phenyl, $R^6$ is hydrogen or methyl and $R^4$ and $R^8$ are each chlorine or methyl.

8. A mixture according to claim 1, wherein the polysulfone has a heat deflection temperature of at least 150 °C.

9. A mixture according to claim 8, wherein the polysulfone contains recurring units of the formula IV

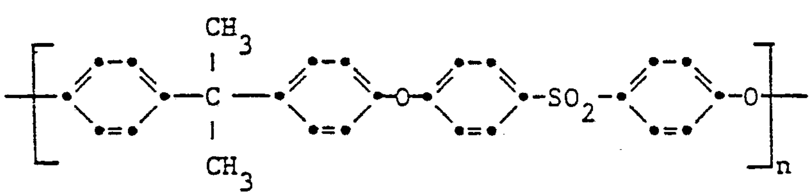

(IV)

wherein n preferably has an average value of 50 to 120.

10. A mixture according to claim 9, wherein the polysulfone has a melting point in the range from 350 to 370 °C, a heat deflection temperature of 175 °C and n has an average value of 50 to 80.

11. A mixture according to claim 1, which additionally contains as component (d) 1 to 12, preferably 2 to 6, parts by weight of a finely particulate filler, the primary particles of which filler have an average size of 2 to 100 nm, preferably 3 to 30 nm.

12. A mixture according to claim 11, wherein the filler is titanium dioxide, and especially silicon dioxide or aluminium oxide.

13. A mixture according to claim 1, wherein the proportions of the components (b) and (c) independently of one another are: imidazolide (b) 4 to 12, especially 5 to 8, parts by weight, and polysulfone (c) 5 to 30, especially 8 to 15, parts by weight, each based on 100 parts by weight of the epoxy resin (a).

14. A mixture according to claim 11, wherein the proportion of the polysulfone (c) is 10 to 40, especially 12 to 25, parts by weight, based on 100 parts by weight of the epoxy resin (a).

15. Use of the mixture according to claim 1 for the preparation of cured moulded articles.

16. Use of the mixture according to claim 1 for the preparation of prepregs for fibre reinforced composites or of adhesive films.

## Revendications

1. Mélange thermodurcissable stable au stockage qui contient :

a) 100 parties en poids d'une résine époxydique,

b) de 3 à 15 parties en poids d'un imidazolide répondant à la formule I :

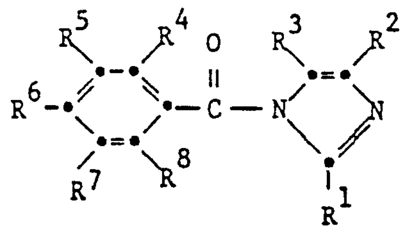

(I)

dans laquelle $R^1$, $R^2$ et $R^3$ représentent chacun, indépendamment les uns des autres, l'hydrogène, un alkyle en $C_1$-$C_{12}$, un cycloalkyle en $C_5$-$C_{10}$ ou un aryle en $C_6$-$C_{10}$, et $R^4$ à $R^8$ représentent chacun, indépendamment les uns des autres, l'hydrogène, un alkyle en $C_1$-$C_{12}$, un halogène, un nitro ou un trifluorométhyle, les symboles $R^4$ et $R^8$ ne représentent pas en même temps chacun l'hydrogène, et

c) de 2 à 50 parties en poids d'une polysulfone thermoplastique dont la masse moléculaire moyenne est d'au moins 10 000.

2. Mélange selon la revendication 1 dans lequel la résine époxydique a une teneur en radicaux époxy de 5 à 9 équivalents/kg et est un éther glycidylique, un ester glycidylique ou un dérivé N-glycidylique d'un composé cycloaliphatique, de préférence d'un composé aromatique ou hétérocyclique.

3. Mélange selon la revendication 1 dans lequel la résine époxydique est une novolaque époxydée ou un dérivé glycidylique d'un bis-phénol, d'un acide dicarboxylique aromatique ou cycloaliphatique, d'une diamine aromatique, d'une hydantoïne ou de l'acide isocyanurique.

4. Mélange selon la revendication 1 dans lequel la résine époxydique est une novolaque phénolique époxydée, un dérivé glycidylique du bis-phénol A, du bis-phénol F, de l'acide hexahydrophtalique ou du diamino-4,4' diphénylméthane, une triglycidyl-bis-hydantoïne ou un mélange de ces résines.

5. Mélange selon la revendication 1 dans lequel la résine époxydique est un mélange d'éther diglycidylique du bis-phénol F et de bis-(N,N-diglycidylamino-4phényl)-méthane.

6. Mélange selon la revendication 1 dans lequel les symboles $R^2$, $R^3$, $R^5$ et $R^7$, dans la formule de l'imidazolide, représentent chacun l'hydrogène, $R^1$ représente un alkyle en $C_1$-$C_4$ ou un phényle, et les symboles $R^4$, $R^6$ et $R^8$ représentent chacun, indépendamment les uns des autres, l'hydrogène, un alkyle en $C_1$-$C_4$ ou un halogène.

7. Mélange selon la revendication 6 dans lequel $R^1$ représente un radical méthyle, éthyle ou phényle, $R^6$ représente l'hydrogène ou un méthyle, et $R^4$ et $R^8$ représentent chacun le chlore ou un méthyle.

8. Mélange selon la revendication 1 dans lequel la polysulfone a une stabilité dimensionnelle à chaud d'au moins 150 °C.

9. Mélange selon la revendication 8 dans lequel la polysulfone contient des motifs répétés répondant à la formule IV :

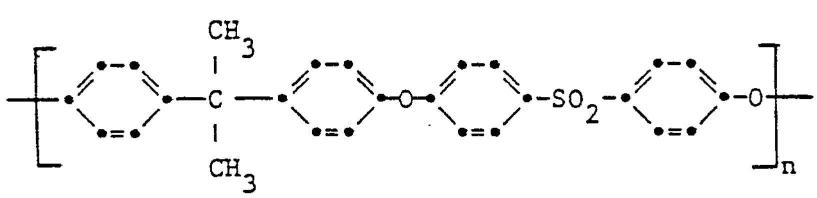

(IV)

dans laquelle n a une valeur moyenne qui est de préférence comprise entre 50 et 120.

10. Mélange selon la revendication 9 dans lequel la polysulfone a un point de fusion compris entre 350 et 370 °C et une stabilité dimensionnelle à chaud de 175 °C et en ce que l'indice n a une valeur moyenne de 50 à 80.

11. Mélange selon la revendication 1 qui contient en outre, comme composante (d), de 1 à 12 parties en poids, de préférence de 2 à 6 parties en poids, d'une charge en grains fins qui a une dimension moyenne des particules primaires de 2 à 100 nm, de préférence de 3 à 30 nm.

12. Mélange selon la revendication 11 dans lequel la charge est du dioxyde de titane ou, plus particulièrement, du dioxyde de silicium ou de l'oxyde d'aluminium.

13. Mélange selon la revendication 1 dans lequel les proportions des composantes (b) et (c) sont, indépendamment l'une de l'autre : de 4 à 12 parties en poids, de préférence de 5 à 8, pour l'imidazolide (b), et de 5 à 30 parties en poids, plus particulièrement de 8 à 15, pour la polysulfone (c), à chaque fois pour 100 parties en poids de la résine époxydique (a).

14. Mélange selon la revendication 11 dans lequel la proportion de la polysulfone (c) est de 10 à 40 parties en poids, plus particulièrement de 12 à 25, pour 100 parties en poids de la résine époxydique (a).

15. Application du mélange selon la revendication 1 à la fabrication d'objets moulés durcis.

16. Application du mélange selon la revendication 1 à la fabrication de pré-imprégnés pour des matériaux composites renforcés par des fibres, ou à la fabrication de pellicules adhésives.